# EUROPÄISCHE PATENTSCHRIFT

(11) **EP 0 837 535 B1**
(45) Veröffentlichungstag und Bekanntmachung des Hinweises auf die Patenterteilung: **16.07.2003**
(21) Anmeldenummer: 97116940.4
(22) Anmeldetag: 30.09.1997
(51) Int. Cl.: H02G 3/12

(54) **Versorgungsbalken für die Intensivpflege**
Distribution duct for intensive care
Canalisation de distribution pour soins intensifs

(30) Priorität: 15.10.1996 DE 29617895 U
(43) Veröffentlichungstag der Anmeldung: 22.04.1998
(73) Patentinhaber: TRILUX-LENZE GmbH & Co. KG, D-59759 Arnsberg (DE)
(72) Erfinder: Draken, Dieter, 59755 Arnsberg (DE); Lehrlich,Karl, 59757 Arnsberg (DE)
(74) Vertreter: Selting, Günther, Dipl.-Ing.

(56) Entgegenhaltungen:
- EP-A- 0 338 210
- DE-A- 3 714 196

## Beschreibung

Die Erfindung betrifft einen Versorgungsbalken für die Intensivpflege, bei welchem an einer Versorgungswand eines langgestreckten Gehäuses Öffnungen vorgesehen sind, an denen Funktionseinheiten wie Steckdosen für Netzstrom oder Schwachstromsignale, sowie Gas- oder Flüssigkeitsanschlüsse montiert sind.

aus DE 37 14 196 A1 ist ein Versorgungsbalken bekannt, bei dem in Öffnungen eines langgestreckten Profilgehäuses Funktionseinheiten montiert sind. Dabei sind jeweils mehrere Funktionseinheiten an einem Hilfsrahmen befestigt, der mit Rastelementen an der Rückseite der Versorgungswand des Gehäuses leicht lösbar montiert ist. Zu diesem Zweck sind an der Rückseite der Versorgungswand längslaufende Profilstege vorgesehen, an denen der Hilfsrahmen festklemmbar ist. Die zu einer Gruppe zusammengefaßten Funktionseinheiten müssen somit als Gruppe montiert und ausgewechselt werden. Sie können extern an dem Hilfsrahmen befestigt und verkabelt werden. Wenn eine der Funktionseinheiten der Gruppe defekt ist, muß die gesamte Gruppe ersetzt werden. Wenn ein defekter Zustand unmittelbar vor oder während der Behandlung eines Patienten eintritt, ist es erforderlich, die Gruppe von Funktionseinheiten vor ihrer Demontage von externen Anschlüssen zu befreien, obwohl verschiedene Funktionseinheiten dieser Gruppe noch funktionsfähig sind. Außerdem stellt der Hilfsrahmen ein zusätzliches Bauteil dar.

Der Erfindung liegt die Aufgabe zugrunde, einen Versorgungsbalken zu schaffen, bei dem die Funktionseinheiten auf einfache Weise leicht auswechselbar an der Versorgungswand befestigt sind.

Die Lösung dieser Aufgabe erfolgt erfindungsgemäß mit den im Anspruch 1 angegebenen Merkmalen.

Bei dem erfindungsgemäßen Versorgungsbalken sind die Funktionseinheiten jeweils mit einer sich am Rand der Öffnung der Versorgungswand abstützenden Frontplatte versehen, die an ihren einander gegenüberliegenden Rändern Halteelemente aufweist, die in die Profilstege des Gehäuses eingreifen. Die Halteelemente befinden sich an der Rückseite der Frontplatte unmittelbar hinter der Versorgungswand. Sie sind kurz und greifen mit den benachbarten Profilleisten zusammen. Der Halt einer Versorgungseinheit an der Frontplatte an der Versorgungswand des Gehäuses erfolgt somit durch die Frontplatte, an der das Funktionsteil der Funktionseinheit befestigt ist. Während bei dem erwähnten bekannten Versorgungsbalken die Funktionsteile wie bei einer üblichen elektrischen Wandsteckdose am rückwärtigen Ende mit einer Tragstruktur verbunden sind und die Frontplatte tragen, bildet bei dem erfindungsgemäßen Versorgungsbalken die Frontplatte den Träger der gesamten Funktionseinheit. Damit wird eine zusätzliche Tragstruktur im Innern des Gehäuses entbehrlich.

Die Funktionseinheit kann eine elektrische oder fluidische Steckdose sein, wobei eine fluidische Steckdose eine Schlauchkupplung für Gas- oder Flüssigkeitsanschlüsse ist. Bei einer elektrischen Steckdose ist zu unterscheiden zwischen einer Netzsteckdose und einer Schwachstrom-Steckdose. Die Funktionseinheit kann auch ein Schalter oder ein Anzeigeinstrument bzw. eine Signalleuchte sein. In jedem Fall hat die Funktionseinheit eine Frontplatte, die das Tragteil bildet und hinter der das Funktionsteil befestigt ist.

Zweckmäßigerweise ist mindestens ein Halteelement des einen Randes der Frontplatte ein elastisches Klemmteil, das einrastend mit der zugehörigen Profilleiste des Gehäuses zusammengreift. Dadurch ist die Montage der Funktionseinheit durch einfaches Andrücken gegen die Rückseite der Versorgungswand möglich, ohne daß irgendwelche Hilfsmittel oder Werkzeuge benötigt würden. Zum Lösen der Funktionseinheit kann das Klemmteil, das an der Profilleiste verrastet ist, deformiert werden, um von der Profilleiste freizukommen.

Die Halteelemente sind vorzugsweise der Frontplatte einstückig angeformt, so daß keine separaten Halteelemente erforderlich sind und die Halteelemente auch nicht an der Frontplatte befestigt werden müssen.

Bei einer bevorzugten Ausführungsform der Erfindung ist das Halteelement an einem Rand der Frontplatte der Funktionseinheit starr, während dasjenige am gegenüberliegenden Rand bogenförmig ist und einen elastischen Federschenkel aufweist.

Im folgenden wird unter Bezugnahme auf die Zeichnungen ein bevorzugtes Ausführungsbeispiel der Erfindung näher erläutert.

Es zeigen:
- Fig. 1: einen Vertikalschnitt durch einen Teil des Versorgungsbalkens beim Einsetzen einer Funktionseinheit,
- Fig. 2: eine Frontansicht der Funktionseinheit aus Richtung des Pfeiles II-II von Fig. 1,
- Fig. 3: in gleicher Darstellung wie Fig. 1 die Funktionseinheit im montierten Zustand, und
- Fig. 4: eine Frontansicht der Versorgungswand aus Richtung des Pfeiles IV von Fig. 3.

Der Versorgungsbalken 10 für die Intensivpflege wird an einer Raumwand oder abgehängt an einer Decke montiert. Er weist ein langgestrecktes Gehäuse 11 auf, von dem in den Zeichnungen ein Profilteil aus einem Aluminiumprofil dargestellt ist. An diesem Profilteil befindet sich die Versorgungswand 12, hinter der im Gehäuseinneren die Funktionseinheiten 13 befestigt sind, an welche von außen Anschlußelemente angeschlossen werden können. Diese Anschlußelemente dienen dazu, externe Geräte wie Beatmungsgeräte, Infusionsgeräte, EKG-Geräte u.dgl., mit dem Versorgungsbalken zu verbinden.

In der Versorgungswand 12 befindet sich für jede Funktionseinheit 13 eine Öffnung 14, die im Beispielsfall rechteckig (quadratisch) ist. Sämtliche Öffnungen 14 sind in horizontaler Reihe nebeneinander angeordnet.

An der Rückseite der Versorgungswand 12 verlaufen oberhalb und unterhalb der Öffnungen 14 durchgehende Profilleisten 15,16, die L-förmig ausgebildet sind und gegeneinander gerichtete Halteschenkel 15a,16a aufweisen.

Die Funktionseinheit 13 ist im vorliegenden Fall eine elektrische Netz-Steckdose. Sie weist ein Aufnahmeteil 17 für einen externen Netzstecker und ein hinter dem Aufnahmeteil mit einer Schraube 18 befestigtes Funktionsteil 19 auf, welches den Steckdosensockel bildet, an dem die elektrischen Kontakte und Anschlußklemmen vorgesehen sind. Von dem Funktionsteil 19 erstrecken sich Erdkontaktbügel 20 durch Schlitze des Aufnahmeteils 17 hindurch.

Das Aufnahmeteil 17 ist an seiner Vorderseite mit einer Frontplatte 21 versehen, welche die Steckerfassung 22 umgibt. Die Frontplatte 21 weist einen die Öffnung 14 passend ausfüllenden Ansatz 21a auf, dessen Stärke gleich der Wandstärke der Versorgungswand 12 ist, so daß die Vorderfront des Ansatzes 21a bündig mit der Außenfläche der Versorgungswand 12 abschließt. Hinter dem Ansatz 21a befindet sich ein überstehender umlaufender Stützrand 21b, der gegen den Rand der Öffnung 14 gesetzt wird.

Am oberen Rand der Frontplatte steht von dem Stützrand 21b ein leistenförmiges Halteelement 23 ab, welches gegenüber dem Stützrand 21b nach hinten versetzt ist. Vom unteren Rand des Stützrandes 21b stehen zwei Halteelemente 24 nach hinten ab. Das obere Halteelement 23 verläuft parallel zu der Frontplatte 21 und besteht aus einem starren Ansatz, der die Frontplatte überragt. Die unteren Halteelemente 24 stehen dagegen von der Frontplatte 21 nach hinten ab. Sie sind als bogenförmige Klemmteile ausgebildet, die einen zurückgebogenen, nach außen federnden Federschenkel 24a aufweisen. An dem Federschenkel 24a befindet sich eine Rastnase 25.

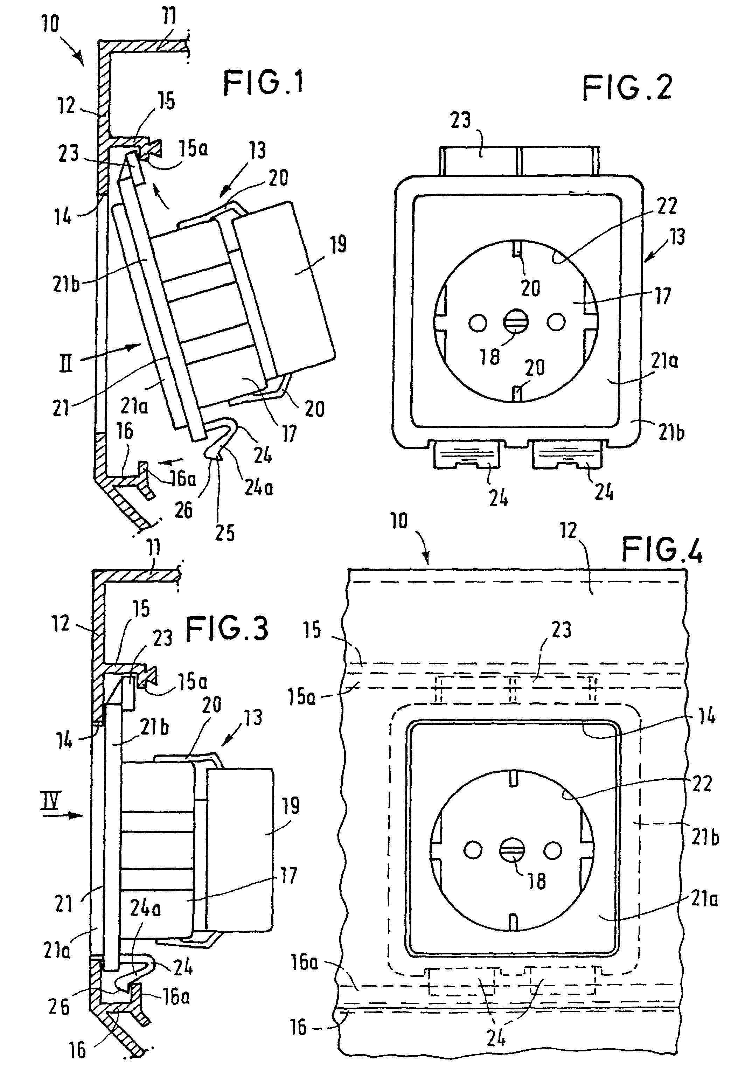

Bei der Montage der Funktionseinheit 13 wird das Halteelement 23 unter den Schenkel 15a der Profilleiste 15 geschoben (Figur 1) und die Funktionseinheit 13 wird gegen die Rückseite der Versorgungswand 12 geschwenkt, wobei der Ansatz 21a der Frontplatte 21 passend in die Öffnung 14 eintritt. Dabei gleitet eine Schrägfläche 26 des Federschenkels 24a an dem Schenkel 16a der Profilleiste 16 entlang, wodurch der Federschenkel 24a nach innen gedrückt wird und die Rastnase 25 hinter dem Schenkel 16a einrastet (Figur 3). Die Montage der Funktionseinheit 13 ist daher werkzeuglos möglich.

Wenn nur das Funktionsteil 19 ausgewechselt werden soll, wird die Schraube 18 von der Vorderseite her gelöst und das Funktionsteil 19 kann vom Innern des Versorgungsbalkens her abgenommen werden, während das Aufnahmeteil 17 an der Versorgungswand verbleibt. Soll dagegen das gesamte Funktionsteil 13 entfernt werden, so kann mit einem Schraubenzieher zwischen die Profilleiste 16 und die Federschenkel 24a gedrückt werden, wodurch die Halteelemente 24 von der Profilleiste freikommen und die Funktionseinheit gelöst werden kann.

Das Aufnahmeteil 17 besteht mit der Frontwand 21 und den Halteelementen 23,24 aus einem einstückig geformten Kunststoffteil.

## Patentansprüche

1. Versorgungsbalken für die Intensivpflege, mit einem langgestreckten Gehäuse (11), das mindestens eine Versorgungswand (12) mit an der Rückseite verlaufenden Profilstegen (15,16) und mindestens einer dazwischen angeordneten Öffnung (14) für eine Funktionseinheit (13) aufweist, welche im Gehäuseinnern befestigt und von außen zugänglich ist, wobei die Funktionseinheit (13) einen sich von der Gehäuseinnenseite her am Rand der Öffnung (14) der Versorgungswand (12) abstützende Frontplatte (21) und einen hinter der Frontplatte (21) befestigten Funktionsteil (19) aufweist,
**dadurch gekennzeichnet,**
**daß** die Frontplatte (21) an gegenüberliegenden Rändern mit Halteelementen (23,24) versehen ist, die in die Profilstege (15,16) der Versorgungswand (12) eingreifen.

2. Versorgungsbalken nach Anspruch 1, **dadurch gekennzeichnet, daß** die Frontplatte (21) einen die Öffnung (14) ausfüllenden Ansatz (21a) aufweist, dessen Stärke gleich der Wandstärke der Versorgungswand (12) ist und der von einem Stützrand (21b) umgeben ist, wobei die Halteelemente (23,24) von dem Stützrand (21b) abstehen.

3. Versorgungsbalken nach Anspruch 1 oder 2, **dadurch gekennzeichnet, daß** mindestens ein Halteelement (24) des einen Randes der Frontplatte (21) ein elastisches Klemmteil ist.

4. Versorgungsbalken nach Anspruch 3, **dadurch gekennzeichnet, daß** das Klemmteil (24) bogenförmig ausgebildet ist und einen Federschenkel (24a) aufweist, der an der zugehörigen Profilleiste (16) verrastbar ist.

5. Versorgungsbalken nach einem der Ansprüche 1 bis 4, **dadurch gekennzeichnet, daß** mindestens ein Halteelement (23) starr ist.

6. Versorgungsbalken nach einem der Ansprüche 1 bis 5, **dadurch gekennzeichnet, daß** die Funktionseinheit (13) eine elektrische oder fluidische Steckdose ist.

7. Versorgungsbalken nach einem der Ansprüche 1 bis 5, **dadurch gekennzeichnet, daß** die Funktionseinheit (13) ein elektrischer Schalter ist.

## Claims

1. A distribution duct for intensive care, comprising an elongated housing (11) including at least one supply wall (12) having profiled bars (15,16) extending on its rear side and having at least one opening (14) arranged between the profiled bars for accommodating a functional unit (13) attached internally of the housing and being accessible from outside, the functional unit (13) comprising a front plate (21) supported from the inner side of the housing on the edge of the opening (14) of the supply wall (12), and a functional portion (19) attached behind the front plate (21),
**characterized in**
**that** the front plate (21) is on opposite edges thereof provided with holding elements (23,24) engaging the profiled bars (15,16) of the supply wall (12).

2. The distribution duct according to claim 1, **characterized in that** the front plate (21) comprises a projecting portion (21a) configured to fill the opening (14), the projecting portion (21a) having a thickness equal to the wall thickness of the supply wall (12) and being surrounded by a supporting edge (21b), with the holding elements (23,24) arranged to extend from the supporting edge (21b).

3. The distribution duct according to claim 1 or 2, **characterized in that** at least one holding element (24) of one edge of the front plate (21) is an elastic clamping member.

4. The distribution duct according to claim 3, **characterized in that** the clamping member (24) has a curved shape and comprises a spring leg (24a) adapted to be locked on the associated profiled bar (16).

5. The distribution duct according to any one of claims 1 to 4, **characterized in that** at least one holding element (23) is rigid.

6. The distribution duct according to any one of claims 1 to 5, **characterized in that** the functional unit (13) is an electric socket or fluid socket.

7. The distribution duct according to any one of claims 1 to 5, **characterized in that** the functional unit (13) is an electric switch.

## Revendications

1. Canalisation de distribution pour soins intensifs, comprenant un boîtier (11) allongé qui présente au moins une paroi de distribution (12) avec des nervures profilées (15, 16) s'étendant sur la face arrière et au moins une ouverture (14) disposée entre celles-ci et destinée à une unité fonctionnelle (13), laquelle est fixée à l'intérieur du boîtier et accessible depuis l'extérieur, l'unité fonctionnelle (13) présentant un panneau frontal (21) s'appuyant depuis la face intérieure du boîtier sur le bord de l'ouverture (14) de la paroi de distribution (12), ainsi qu'un élément fonctionnel (19) fixé derrière le panneau frontal (21), **caractérisée en ce que** le panneau frontal (21), au niveau de bords opposés, est muni d'éléments de retenue (23, 24) s'engageant dans les nervures profilées (15, 16) de la paroi de distribution (12).

2. Canalisation de distribution selon la revendication 1, **caractérisée en ce que** le panneau frontal (21) présente un appendice (21a) remplissant l'ouverture (14), dont l'épaisseur est égale à l'épaisseur de paroi de la paroi de distribution (12), et qui est entouré par un bord d'appui (21b), les éléments de retenue (23, 24) saillant du bord d'appui (21b).

3. Canalisation de distribution selon la revendication 1 ou 2, **caractérisée en ce qu'**au moins un élément de retenue (24) d'un bord du panneau frontal (21) est un élément de serrage élastique.

4. Canalisation de distribution selon la revendication 3, **caractérisée en ce que** l'élément de serrage (24) est construit en forme d'un arc et présente une branche de ressort (24a) pouvant d'encliqueter sur la baguette profilée (16) associée.

5. Canalisation de distribution selon l'une quelconque des revendications 1 à 4, **caractérisée en ce qu'**au moins un élément de retenue (23) est rigide.

6. Canalisation de distribution selon l'une quelconque des revendications 1 à 5, **caractérisée en ce que** l'unité fonctionnelle (13) est une prise électrique ou fluidique.

7. Canalisation de distribution selon l'une quelconque des revendications 1 à 5, **caractérisée en ce que** l'unité fonctionnelle (13) est un interrupteur électrique.
